# EUROPÄISCHE PATENTSCHRIFT

(11) **EP 1 134 457 B1**
(45) Veröffentlichungstag und Bekanntmachung des Hinweises auf die Patenterteilung: **18.10.2006**
(21) Anmeldenummer: 01105321.2
(22) Anmeldetag: 07.03.2001
(51) Int. Cl.: F16H 59/02, F16H 63/40, F16D 48/06, B60W 10/02, B60W 10/04

(54) **Verfahren für eine Komfortschalthilfe für ein Handschaltgetriebe in einem Kraftfahrzeug**
Method for reducing driver workload in a vehicle equipped with a manually shifted gearbox
Procédure pour réduire la charge de travail d'un conducteur dans un véhicule avec boîte de transmission manuelle

(30) Priorität: 14.03.2000 DE 10012354
(43) Veröffentlichungstag der Anmeldung: 19.09.2001
(73) Patentinhaber: MAN Nutzfahrzeuge Aktiengesellschaft, 80976 München (DE)
(72) Erfinder: Schaller, Karl Viktor, Dr.-Ing., 82194 Gröbenzell (DE); Drimml, Peter, Dipl.-Ing., 85757 Karlsfeld (DE)

(56) Entgegenhaltungen:
- EP-A- 0 189 050
- EP-A- 0 282 726
- EP-A- 0 512 728
- EP-A- 0 595 496
- EP-A- 0 863 039
- DE-A- 4 012 595
- DE-A- 19 857 112
- GB-A- 2 066 919
- GB-A- 2 113 341
- US-A- 4 275 804
- US-A- 5 002 170
- US-A- 5 383 823

## Beschreibung

Die Erfindung betrifft eine Komfortschalthilfe für ein Handschaltgetriebe nach dem Oberbegriff des Anspruches 1.

Aus der EP 0170 465 B1 ist ein Verfahren zur Steuerung eines halbautomatischen, mechanischen Geschwindigkeitswechselgetriebesystems bekannt. Mit dem Verfahren sind bei Betätigen des Handschalthebels aus einer Mittelposition heraus, über eine zentrale Verarbeitungseinheit, Schaltungen in Richtung ""hoch" und in Richtung "herunter" möglich, wobei die Verarbeitung der Signale, die vom Handschalthebel ausgehen, Signale von der Recheneinheit in vorgegebenen logischen Regeln ausgegeben werden, um Ansteuersignale an nicht manuell betätigte Stellglieder, wie Kupplungsstellglied und Getriebestellglied abzugeben.

Durch mehrmaliges Betätigen des Handschalthebels kann auch mehr als ein Gangsprung, falls dieser zulässig ist, geschaltet werden. Die Schaltung läuft, wenn der Handschalthebel seine Zielposition erreicht hat, vollautomatisch ab.

Eine solche halbautomatische Schaltung, die man auch mit "Ratschenschaltung" bezeichnen könnte, engt den Fahrzeugführer in seiner Gangauswahl etwas ein und kann in schwierigen Fahrsituationen eine längere Zugkraftunterbrechung mit sich ziehen, was gerade in diesen Fällen zu Problemen führen kann.

Ein weiteres Verfahren dieser Art ist aus der DE 39 37 302 A1 bekannt. Bei diesem Verfahren wird zur Beschleunigung des Schaltvorganges eine Drehzahlanpassung des Dieselmotors bei geschlossener Hauptkupplung durchgeführt und zwar dann, wenn das zu schaltende Zahnrad auf der Getriebehauptwelle in eine eingriffslose Stellung gebracht ist.

Mit einer automatischen Drehzahlsteuerung des Antriebsmotors werden die in Eingriff zu bringenden Zahnräder synchronisiert und der Schaltvorgang kann durchgeführt werden. Dieses Verfahren ist für den Fahrzeugführer eine gewisse Erleichterung. Es können außerdem Klauenschaltgetriebe verwendet werden, die, ohne dieses Verfahren, von dem Fahrzeugführer sehr hohes Können fordern.

Ferner beschreibt die gattungsgemäße GB 2 066 919 A einen Schalthebel mit einem Druckknopf, durch den eine Betätigung der Kupplung bewirkt wird. Hierbei wird in der Zeit des Schaltvorgangs die Motordrehzahl ständig auf die Getriebeeingangsdrehzahl, die sich aus dem aktuell geschalteten Gang und der Fahrgeschwindigkeit ergibt, ansynchronisiert. Dies wird erreicht, indem während des Schaltvorgangs die Motordrehzahl und die Getriebeeingangsdrehzahl gemessen und auf der Grundlage dieser Messwerte die Drehzahlen vor einem Einkupplungsvorgang aufeinander abgestimmt werden, wobei das Auskuppeln der Kupplung bereits vor einem Schaltvorgang realisiert wird.

Für den heutigen Begriff von Komfort sowie die Anforderungen an die Langlebigkeit der verwendeten Fahrzeugkomponenten sind die Auswirkungen der zuvor beschriebenen Verfahren jedoch unzureichend.

Aufgabe der Erfindung ist es, mit einem Handschalthebel ein Vielstufenganggetriebe mit X-Gängen komfortabel schaltbar zu machen.

Die Aufgabe wird erfindungsgemäß durch die Merkmale des Anspruches 1 gelöst.

Die Erfindung betrifft ein Verfahren für eine Komfortschalthilfe für ein Handschaltgetriebe in einem Kraftfahrzeug, mit einem Verbrennungsmotor und einem Wechselgetriebe, das mit einem Handschalthebel schaltbar ist, und der Handschalthebel einen Druck- oder Sensorknopf (DSK) sowie gegebenenfalls einen Splitschalter für die Schaltung eines Splitgetriebes und einen Schalter für die Schaltung eines Bereichsgetriebes aufweist. Ferner verfügt das Fahrzeug über eine automatisch schaltbare Kupplung zwischen Verbrennungsmotor und Getriebe, über ein elektrisches/elektronisches Fahrpedal und über einen Bordrechner, wobei mit dem Schalthebel manuell ein Schaltvorgang durchführbar ist und in dieser Zeit die Motordrehzahl (n1) ständig auf die Getriebeeingangsdrehzahl (n2), die sich aus dem aktuell geschalteten Gang und der Fahrgeschwindigkeit ergibt, ansynchronisiert wird. Das Erfindungsgemäße Verfahren zeichnet sich dadurch aus, dass durch Drücken des Druck- oder Sensorknopfes (DSK) im Handschalthebel Signale vom Bordrechner ausgehen, mit denen das Motordrehmoment abgesenkt und danach die Kupplung geöffnet wird, durch Loslassen des Druck- oder Sensorknopfes (DSK) die Kupplung geschlossen wird und danach das Motordrehmoment an die Fahrpedalstellung über Signale vom Bordrechner angepasst wird.

Die Kupplung wird bei der Schaltaktion vom Fahrzeugführer nicht bedient.

Außerdem ist der Fahrzeugführer in der Gangwahl nicht eingeschränkt, d. h. er kann z. B., wenn dies erforderlich ist, das Fahrzeug abbremsen und mehrere Gänge in einer Schaltaktion herunterschalten.

Die erfindungsgemäße Komfortschaltung ist deshalb möglich, weil durch das Drücken des DSK der Bordrechner ein Signal bekommt, dass er ein Signal ausgeben muss zur Reduzierung des Motordrehmoments und zum Öffnen der Kupplung sowie zum Ansynchronisieren an die Getriebeeintriebsdrehzahl. Der Fahrzeugführer muss den DSK gedrückt halten. Nun kann der Fahrzeugführer den Handschalthebel in die gewünschte Position bringen. Dadurch wird der Schaltvorgang im Hauptgetriebe übber Synchronringe durchgeführt. Der Bordrechner synchronisiert gleichzeitig die Motordrehzahl an die neue Getriebeeintriebsdrehzahl, die sich aus der aktuellen Getriebeübersetzung und der Fahrzeuggeschwindigkeit ergibt, an.

Wenn nun der Fahrzeugführer den Handschalthebel in die gewünschte Position gebracht hat, muss er nur noch den DSK loslassen. Dadurch wird durch Signale aus dem Bordrechner die Kupplung geschlossen und das Motordrehmoment an die Fahrpedalstellung angepasst.

Der gesamte Vorgang geht, größtenteils abhängig von der Geschwindigkeit, wie schnell der Schalthebel bewegt wird, recht schnell. Dadurch ist die Zeit der Zugkraftunterbrechung sehr gering.

Während des ganzen Schaltvorganges kann der Fahrzeugführer seinen Fuß konstant auf dem Fahrpedal belassen, oder, wenn z. B. die Fahrstrecke bergab führt, den Fuß vom Fahrpedal nehmen.

Wenn der Fahrzeugführer den DSK drückt, in der Absicht, das Hauptgetriebe zu schalten, die sich ergebende Fahrsituation aber ein Schalten nicht erfordert oder nicht sinnvoll macht, braucht er den DSK nur wieder loslassen. Dadurch wird durch den Bordrechner, da der Motor an die aktuelle Getriebeeintriebsdrehzahl bereits ansynchronisiert ist, die Kupplung wieder geschlossen und das Motordrehmoment wieder, entsprechend der Fahrpedalstellung, dem Fahrerwunsch angepasst.

Die Komfortschalthilfe ist weiterhin für das Schalten einer Split- und/oder Bereichsgruppe vorteilhaft. In Vielgangschaltgetrieben, wie z. B. in einem schweren Lastkraftwagen, sind im Normalfall 12 oder 16 Gänge vorhanden. Dem Hauptgetriebe mit z. B. 4 Gängen ist eine Bereichsgruppe mit z. B. 2 Gängen vor- oder nachgeschaltet, die beide in einem Getriebegehäuse untergebracht sind. Dieser Einheit ist eine Splitgruppe wiederum mit z. B. 2 Gängen vorgeschaltet, mit der kleinere Übersetzungsunterschiede schaltbar sind.

Da die Getriebe hintereinander angeordnet sind, ergeben sich in dem genannten Beispiel 16 Gänge.

Das Bereichsgetriebe ist z. B. über einen Wippschalter, der am Handschalthebel angebracht ist, schaltbar. Die Splitgruppe ist ebenfalls über einen weiteren Schalter im Handschalthebel schaltbar.

Die genannten Splitgetriebe- und Bereichsgetriebeschaltungen sind ebenfalls mit der Komfortschalthilfe durchführbar.

Eine Anzeige der gewählten Einstellung ist in vorteilhafter Weise am Armaturenbrett anzeigbar.

Mit dem DSK sind also folgende Schaltungen in je einer Schaltaktion möglich:
a) das Splitgetriebe, mit Vorwählfunktion,
b) das Bereichsgetriebe, mit Vorwählfunktion,
c) das Split- und Bereichsgetriebe, mit Vorwählfunktion,
d) das Splitgetriebe und das Hauptgetriebe, wobei das Splitgetriebe mit Vorwählfunktion,
e) das Bereichsgetriebe und das Hauptgetriebe, wobei das Bereichsgetriebe mit Vorwählfunktion, und
f) das Hauptgetriebe.

Für das Schalten des Bereichsgetriebes ist grundsätzlich der Handschalthebel in über die Neutralposition zu bringen.

Für den Anfahrvorgang aus dem Fahrzeugstillstand heraus, wirkt der DSK nicht und es ist eine Kupplungsbetätigung mit dem Fuß erforderlich.

Damit wird dem Fahrzeugführer großer Komfort und eine weitest gehende Freiheit und Wahlfreiheit für sein Schaltverhalten geboten.

In der Zeichnung ist ein Ausführungsbeispiel der Erfindung schematisch dargestellt.

Es zeigt:
- Fig. 1: ein Schaltbild,
- Fig. 2: einen Gangschalthebel.

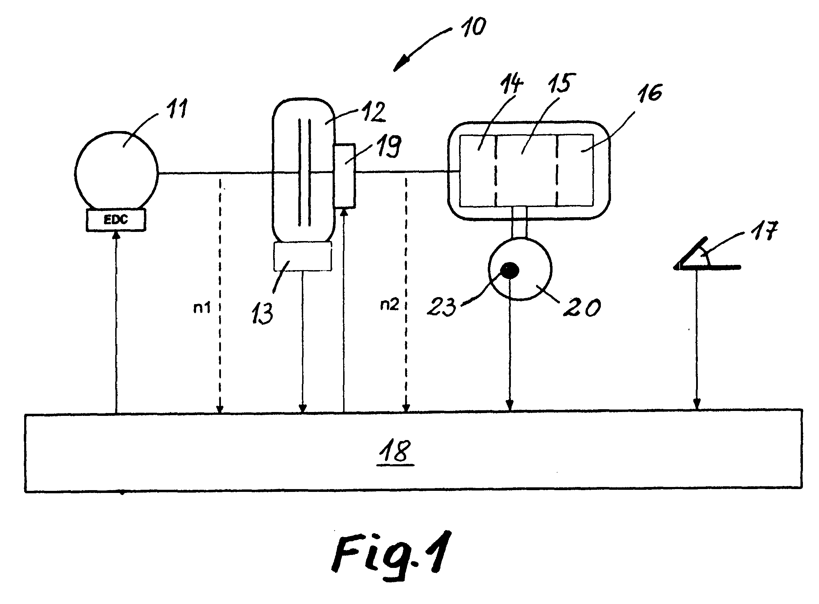

Die Fig. 1 zeigt die Anordnung 10 bzw. das Schaltbild 10 der Komfortschalthilfe für eine Einfach-H-Schaltung. In dem Handschalthebel 20 ist ein Druck- oder Sensorknopf DSK 23 angeordnet.

Wenn der Fahrzeugführer eine Schaltung im Hauptgetriebe 15 vornehmen will, drückt er auf den DSK 23, dadurch wird das Motordrehmoment reduziert und die Kupplung 12 über Signale vom Bordrechner 18 und dem Stellorgan 19 geöffnet.

Der Fahrzeugführer hält den DSK 23 weiterhin gedrückt und bedient den Gangschalthebel in die von ihm gewünschte Zielpostion, wodurch z. B. über eine hydrostatische Gangschalteinrichtung (nicht gezeichnet) und über Synchronringe (nicht gezeichnet) die neue Getriebeeinstellung im Hauptgetriebe 15 durchgeführt wird.

Gleichzeitig wird die Drehzahl n1 an die sich durch die neue Getriebeeinstellung und aktuelle Fahrgeschwindigkeit ergebende Getriebeeintriebsdrehzahl n2 durch Signale aus dem Bordrechner 18 ansynchronisiert.

Durch das Loslassen des DSK 23 wird die Kupplung 12 durch Signale aus dem Bordrechner 18 und durch das Stellorgan 19 wieder geschlossen. Danach wird, ebenfalls durch Signale aus dem Bordrechner 18, das Motordrehmoment des Verbrennungsmotors 11 an die Stellung des Fahrpedals 17, das den Fahrerwunsch darstellt, angepasst.

Eine Schaltung im Splitgetriebe 14 ist mit dem Schalter 21 und eine Schaltung im Bereichsgetriebe 16 ist mit dem Schalter 22 am Schalthebel 20 vorwählbar.

Vorwählbar bedeutet, dass der Fahrzeugführer eine Veränderung eines der Schalter 21, 22 oder beider Schalter 21, 22 vornehmen kann, ohne dass die Schaltung sofort durchgeführt wird. Abhängig nun von der Fahrsituation kann der Fahrzeugführer den DSK 23 drücken oder nicht drücken.

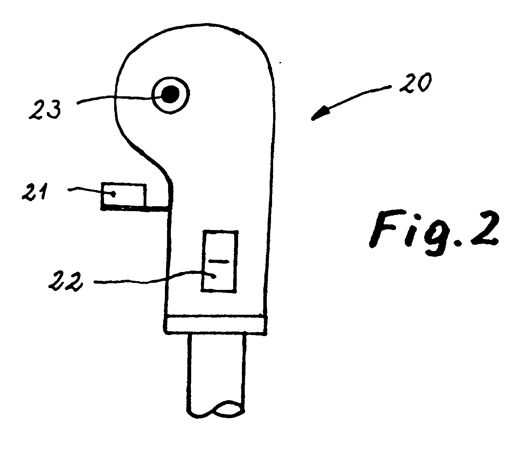

Die Fig. 2 zeigt den Handschalthebel 20 mit dem Schalter 21 für das Splitgetriebe, den Schalter 22 für das Bereichsgetriebe 16 und den Druck- oder Sensorknopf DSK 23 zum Auslösen, Durchführen und Beenden von Schaltaktionen.

## Patentansprüche

1. Verfahren für eine Komfortschalthilfe für ein Handschaltgetriebe in einem Kraftfahrzeug, mit einem Verbrennungsmotor und einem Wechselgetriebe, das mit einem Handschalthebel (20) schaltbar ist, und der Handschalthebel (20) **einen Druck- oder Sensorknopf (DSK) (23) sowie** gegebenenfalls einen Splitschalter (21) für die Schaltung eines Splitgetriebes und einen Schalter (22) für die Schaltung eines Bereichsgetriebes aufweist, mit einer automatisch schaltbaren Kupplung (12) zwischen Verbrennungsmotor und Getriebe, mit einem elektrischen/elektronischen Fahrpedal und mit einem Bordrechner (18), wobei mit dem Schalthebel (20) manuell ein Schaltvorgang durchführbar ist und in dieser Zeit die Motordrehzahl (n1) ständig auf die Getriebeeingangsdrehzahl (n2), die sich aus dem aktuell geschalteten Gang und der Fahrgeschwindigkeit ergibt, ansynchronisiert wird,
**dadurch gekennzeichnet, dass** durch Drücken des Druck- oder Sensorknopfes (DSK) (23) im Handschalthebel (20) Signale vom Bordrechner (18) ausgehen, mit denen das Motordrehmoment abgesenkt und danach die Kupplung (12) geöffnet wird, durch Loslassen des Druck- oder Sensorknopfes (DSK) (23) die Kupplung geschlossen wird und danach das Motordrehmoment an die Fahrpedalstellung (17) über Signale vom Bordrechner (18) angepasst wird.

2. Verfahren nach Anspruch 1, **dadurch gekennzeichnet, dass**, wenn der Druck- oder Sensorknopf (DSK) (23) gedrückt, aber nicht geschaltet wird, das Motordrehmoment reduziert, die Kupplung (12) geöffnet, die Motordrehzahl (n1) an die Getriebeeintriebsdrehzahl (n2) ansynchronisiert und nach dem Loslassen des Druck- oder Sensorknopfes (DSK) (23) die Kupplung (12) geschlossen und dann das Motordrehmoment an die Fahrpedalstellung angepasst wird.

3. Verfahren nach Anspruch 1, **dadurch gekennzeichnet, dass** durch den Druck- oder Sensorknopf (DSK) (23) eine Schaltung mit dem Splitschalter (21) vorwählbar und mit dem Druck- oder Sensorknopf (DSK) (23) auslösbar und durchführbar ist.

4. Verfahren nach den Ansprüchen 1 und 3, **dadurch gekennzeichnet, dass** eine vorgewählte Schaltung mit dem Splitschalter (21) und eine Schaltung des Hauptgetriebes (15) mit dem Gangschalthebel (20) durch Drücken des Druck- oder Sensorknopfes (DSK) (23) und Bedienen des Gangschalthebels (20) in die Zielposition in einer Schaltaktion durchführbar ist.

5. Verfahren nach Anspruch 1, **dadurch gekennzeichnet, dass** mit dem Druck- oder Sensorknopf (DSK) (23) eine vorgewählte Schaltung mit dem Bereichsgetriebeschalter (22), der ebenfalls am Handschalthebel (20) angebracht ist, und durch Bedienen des Handschalthebels in über die Neutralposition und wieder zurück auslösbar und durchführbar ist.

6. Verfahren nach den Ansprüchen 1 und 5, **dadurch gekennzeichnet, dass** mit dem Druck- oder Sensorknopf (DSK) (23) eine vorgewählte Schaltung mit dem Bereichsgetriebeschalter (22) und eine Schaltung des Hauptgetriebes (15) mit dem Gangschalthebel (20) durch Drücken des Druck- oder Sensorknopfes (DSK) (23) und Bedienen des Gangschalthebels (20) in die Zielposition in einer Schaltaktion durchführbar ist.

7. Verfahren nach einem oder mehreren der vorhergehenden Ansprüche, **dadurch gekennzeichnet, dass** eine vorgewählte Schaltung mit dem Splitschalter (21) und eine vorgewählte Schaltung mit dem Bereichsgetriebeschalter (22) mit dem Druck- oder Sensorknopf (DSK) (23) und durch Bedienen des Handschalthebels über die Neutralposition hinweg auslösbar und in einer Schaltaktion durchführbar ist.

8. Verfahren nach den vorhergehenden Ansprüchen, **dadurch gekennzeichnet, dass** für den Fahrzeugstillstand der Druck- und Sensorknopf (DSK) (23) inaktiv ist und für den Anfahrvorgang das Kupplungspedal betätigt werden muss.

## Claims

1. Procedure for a comfort shifting aid for a manual gearbox in a motor vehicle, with an internal combustion engine and a variable-speed gearbox which can be shifted with a manual gearshift lever (20) featuring a push-button or sensor button (DSK) (23) and, if necessary, a splitter switch (21) for shifting the splitter box and a switch (22) for shifting a range-change box, with an automatically engageable clutch (12) between internal combustion engine and gearbox, with an electric/electronic accelerator pedal and with an on-board computer (18), whereby a shifting operation can be manually performed with the gearshift lever (20) and during this operation the engine speed (n1) is constantly being synchronised to the gearbox input speed (n2) resulting from the currently engaged gear and the vehicle's road speed, **characterised in that** if the push-button or sensor button (DSK) (23) in the manual gearshift lever (20) is pressed signals are sent by the on-board computer (18), with which signals the engine torque is lowered and, afterwards, the clutch (12) is disengaged and that if the push-button or sensor button (DSK) (23) is released the clutch is engaged and, afterwards, the engine torque is adjusted to the accelerator pedal position (17) via signals from the on-board computer (18).

2. Procedure according to Claim 1, **characterised in that** if the push-button or sensor button (DSK) (23) is pressed but is not engaged, the engine torque will be reduced, the clutch (12) disengaged, the engine speed (n1) synchronised to the gearbox input speed (n2) and, after the push-button or sensor button (DSK) (23) has been released, the clutch (12) will be engaged and then the engine torque will be adjusted to the accelerator pedal position.

3. Procedure according to Claim 1, **characterised in that** a shifting operation with the splitter switch (21) can be preselected by the push-button or sensor button (DSK) (23) and be triggered and performed with the push-button or sensor button (DSK) (23).

4. Procedure according to the Claims 1 and 3, **characterised in that** a preselected shifting operation can be performed with the splitter switch (21) and a shifting operation of the main gearbox (15) with the gearshift lever (20) in one shifting action by pressing the push-button or sensor button (DSK) (23) and bringing the gearshift lever (20) into the target position.

5. Procedure according to Claim 1, **characterised in that** with the aid of the push-button or sensor button (DSK) (23) a preselected shifting operation can be triggered and performed by actuating the range-change switch (22) also fitted to the manual gearshift lever (20) and by moving the manual gearshift lever (20) beyond the neutral position and returning it.

6. Procedure according to the Claims 1 and 5, **characterised in that** a preselected shifting operation with the range-change switch (22) can be performed with the aid of the push-button or sensor button (DSK) (23) and a shifting operation of the main gearbox (15) can be performed with the gearshift lever (20) by pressing the push-button or sensor button (DSK) (23) and moving the gearshift lever (20) into the target position, both shifting operations being executable in one shifting action.

7. Procedure according to one or several of the foregoing Claims, **characterised in that** a preselected shifting operation with the splitter switch (21) and a preselected shifting operation with the range-change switch (22) can be triggered with the aid of the push-button or sensor button (DSK) (23) and by moving the gearshift lever (20) beyond the neutral position and can be performed in one shifting action.

8. Procedure according to one of the foregoing Claims, **characterised in that** the push-button or sensor button (DSK) (23) is inactive while the vehicle is stationary and that the clutch pedal must be actuated for moving off.

## Revendications

1. Procédé pour une assistance confort de changement de rapport avec une boîte de vitesses manuelle dans un véhicule automobile, avec un moteur à combustion interne et une boîte de vitesses actionnable à l'aide d'un levier de vitesse (20), boîte dont le levier de vitesse (20) comporte un bouton poussoir ou à capteur (DSK) (23) ainsi que, le cas échéant, un commutateur de doubleur (21) pour la commande d'une boîte à doubleur de gamme et un commutateur (22) pour la commande d'une boîte à groupe-relais, avec un embrayage (12) à commande automatique placé entre le moteur à combustion interne et la boîte de vitesses, avec une pédale d'accélérateur électrique/électronique et avec un ordinateur de bord (18), auquel cas le levier de vitesse (20) permet de réaliser un changement de rapport pendant lequel le régime moteur (n1) est synchronisé en permanence par rapport au régime d'entrée de la boîte (n2) qui est le résultat du rapport momentanément enclenché et de la vitesse de marche,
**caractérisé en ce que**, lorsque l'on appuie sur le bouton poussoir ou à capteur (DSK) (23) intégré au levier de vitesse (20), l'ordinateur de bord (18) émet des signaux par lesquels le couple du moteur est réduit, et, ensuite, l'embrayage (12) est ouvert, l'embrayage se fermant lorsque l'on relâche le bouton poussoir ou à capteur (DSK) (23) et le couple du moteur étant ensuite adapté en fonction de la position de la pédale d'accélérateur (17) par le biais des signaux émis par l'ordinateur de bord (18).

2. Procédé selon la revendication 1, **caractérisé en ce que**, si l'on appuie sur le bouton poussoir ou à capteur (DSK) (23), mais ne change pas de rapport, le couple du moteur est réduit, l'embrayage (12) est ouvert et le régime moteur (n1) est synchronisé par rapport au régime d'entrée de la boîte (n2) et que, si l'on relâche le bouton poussoir ou à capteur (DSK) (23), l'embrayage (12) se ferme et, ensuite, le couple du moteur est adapté en fonction de la position de la pédale d'accélérateur.

3. Procédé selon la revendication 1, **caractérisé en ce que**, grâce au bouton poussoir ou à capteur (DSK) (23), il est possible de présélectionner un changement de rapport à l'aide du commutateur de doubleur (21) et de le déclencher et l'exécuter à l'aide du bouton poussoir ou à capteur (DSK) (23).

4. Procédé selon les revendications 1 et 3, **caractérisé en ce qu'**un changement de rapport présélectionné peut être réalisé au cours d'un changement de vitesse à l'aide du commutateur de doubleur (21) et un changement de rapport de la boîte principale (15) à l'aide du levier de vitesse (20) en appuyant sur le bouton poussoir ou à capteur (DSK) (23) et en déplaçant le levier de vitesse (20) dans la position souhaitée.

5. Procédé selon la revendication 1, **caractérisé en ce qu'**avec le bouton poussoir ou à capteur (DSK) (23), un changement de rapport présélectionné est réalisable à l'aide du commutateur de groupe-relais (22), qui est également intégré au levier de vitesse (20), et en actionnant le levier de vitesse en va-et-vient en passant par la position de point mort.

6. Procédé selon les revendications 1 et 5, **caractérisé en ce qu'**avec le bouton poussoir ou à capteur (DSK) (23), il est possible de réaliser un changement de rapport présélectionné au cours d'un changement de rapport à l'aide du commutateur de groupe-relais (22) et un changement de rapport de la boîte principale (15) à l'aide du levier de vitesse (20) en appuyant sur le bouton poussoir ou à capteur (DSK) (23) et en actionnant le levier de vitesse (20) pour le placer dans la position souhaitée.

7. Procédé selon une ou plusieurs des revendications précédentes, **caractérisé en ce qu'**il est possible de déclencher et de réaliser un changement de rapport présélectionné au cours d'un changement de rapport à l'aide du commutateur de doubleur (21) et un changement de rapport présélectionné à l'aide du commutateur de groupe-relais (22) ainsi qu'à l'aide du bouton poussoir ou à capteur (DSK) (23) et en actionnant le levier de vitesse au-delà de la position de point mort.

8. Procédé selon les revendications précédentes, **caractérisé en ce que**, lorsque le véhicule est à l'arrêt, le bouton poussoir ou à capteur (DSK) (23) est inopérant et que, pour pouvoir démarrer, il faut actionner la pédale d'embrayage.
